## Europäisches Patentamt
## European Patent Office
## Office européen des brevets

(19)

(11) Veröffentlichungsnummer: **0 114 272**
**B1**

(12) # EUROPÄISCHE PATENTSCHRIFT

(45) Veröffentlichungstag der Patentschrift:
02.09.87

(51) Int. Cl.⁴: **H 01 M 10/40,** H 01 M 4/60,
**H 01 M 10/36**

(21) Anmeldenummer: 83112233.8

(22) Anmeldetag: 06.12.83

(54) **Elektrochemische Speicherzelle.**

(30) Priorität: 24.12.82 DE 3248076

(43) Veröffentlichungstag der Anmeldung:
01.08.84 Patentblatt 84/31

(45) Bekanntmachung des Hinweises auf die Patenterteilung:
02.09.87 Patentblatt 87/36

(84) Benannte Vertragsstaaten:
AT BE CH FR GB IT LI LU NL SE

(56) Entgegenhaltungen:
EP-A-0 036 118
EP-A-0 053 669
EP-A-0 084 642

JOURNAL OF AMERICAN CHEMICAL SOCIETY,
Band 103, Nr. 25, 1981, Seiten 7620-7629, American
Chemical Society; B.J. COHEN: "The structure of
CC-1065, a potent antitumor agent, and its binding
to DNA"

(73) Patentinhaber: BROWN, BOVERI & CIE
Aktiengesellschaft, Kallstadter Strasse 1, D-6800
Mannheim 31 (DE)

(72) Erfinder: Weddigen, Gert, Dr. Dipl.- Chem., Max-
Reger- Strasse 25, D-6900 Heidelberg (DE)

(74) Vertreter: Kempe, Wolfgang, Dr., c/o BROWN,
BOVERI & CIE AG ZPT Postfach 351, D-6800
Mannheim 31 (DE)

EP 0 114 272 B1

## Beschreibung

Die Erfindung bezieht sich auf eine wiederaufladbare elektrochemische Speicherzelle gemäß dem Oberbegriff des Patentanspruches 1.

Eine solche elektrochemische Speicherzelle eignet sich für den Aufbau von Akkumulatoren hoher Energie und Leistungsdichte.

Aus der EP-Patentanmeldung 00 36 118 ist eine wiederaufladbare elektrochemische Speicherzelle bekannt, die eine feste Anode und eine feste Kathode aufweist, welche von einem flüssigen Elektrolyten umgeben sind. Die Anode und/oder die Kathode sind aus einem konjugierten synthetischen Polymer gefertigt. Insbesondere wird das die Kathode bildende Polymer mit Halogenidionen und das die Anode bildende Polymer mit metallischen Ionen dotiert. Als Nachteil ist bei dieser Batterie die Tatsache anzusehen, daß das bevorzugt verwendete Polyacetylen keine besonders lange Haltbarkeit aufweist, wenn es der Einwirkung von Luft ausgesetzt ist. Dies bedeutet, daß eine solche Speicherzelle luftdicht gekapselt werden muß, wenn sie für einen Langzeitbetrieb vorgesehen ist. Die Herstellungskosten für eine solche Speicherzelle sind dadurch sehr hoch.

Der Erfindung liegt deshalb die Aufgabe zugrunde, eine elektrochemische Speicherzelle der eingangs genannten Art so auszubilden, daß sie für den Aufbau von Akkumulatoren hoher Betriebssicherheit und langer Lebensdauer geeignet ist.

Diese Aufgabe wird erfindungsgemäß durch die kennzeichnenden Merkmale des Patentanspruches 1 gelöst.

Die erfindungsgemäße elektrochemische Speicherzelle kann aufgeladen und entladen werden, so daß sie für den Aufbau von Batterien sehr gut geeignet ist. Die Speicherzelle arbeitet bei Raumtemperatur, insbesondere bei 20° C, so daß bei ihrem Einbau in Batterien eine thermische Isolierung für die Aufrechterhaltung der Arbeitstemperatur nur dann erforderlich ist, wenn die Batterie extremen Witterungsbedingungen ausgesetzt wird. Die Speicherzelle enthält keine Werkstoffe, die schädigende Nebenwirkungen aufweisen. Damit kann die Speicherzelle sehr leicht hergestellt werden. Korrosionserscheinungen treten bei dieser Speicherzelle ebenfalls nicht auf, da bei der Ladung bzw. Entladung keine Reaktionsprodukte auftreten, die beispielsweise das Gehäuse der Speicherzelle durch korrosive Einwirkungen schädigen und damit die Lebensdauer der Speicherzelle mindern. Dichtungsprobleme im Bereich des Verschlusses der Speicherzelle treten hierbei ebenfalls nicht auf, da die Speicherzelle bei niedrigen Temperaturen arbeitet.

Erfindungsgemäß ist das die Anode bildende Polymer mit Elektronendonatoren und das Kathode bildende Polymer mit Elektronenakzeptoren dotiert. Vorzugsweise ist das die Kathode bildende Polymer mit Halogenen oder Chalkogenen dotiert. Als Halogene eignen sich Jod und Brom, während als Chalkogene Selen und Schwefel in Frage kommen. Dem Polymer, welches die Anode bildet, wird Monoisocyanat zugesetzt, so daß seine OH-Gruppen in Urethan-Gruppen umgesetzt werden. Um die Funktionsfähigkeit der Speicherzelle zu verbessern, kann das die Anode bildende Polymer zusätzlich mit Alkalimetallen oder Erdalkalimetallen dotiert werden. Bei einer Ausführungsform der Erfindung weist sowohl die Anode als auch die Kathode einen Kern aus Graphitfilz auf, der mit dem jeweiligen für die Ausbildung der Elektroden vorgesehenen Polymer getränkt ist. Für die Herstellung beider Elektroden wird in jedem Fall ein Polymer mit Triaromatmethaneinheiten verwendet. Bei diesem Polymer handelt es sich um kein konjugiertes System wie bei dem Polyacetylen, da in der Hauptkette periodisch zwei benachbarte Einfachbindungen vorkommen. Ein solches Polymer kann beispielsweise bei der Polykondensation von Bisphenol-A und para-Anisaldehyd hergestellt werden. Die Bildung eines solchen Polymers ist ebenfalls durch eine katalytische Reaktion zu erzielen, bei der zwei und/oder dreifache mit Aromaten substituierte Methane zur Reaktion gebracht werden. Das gleiche Polymer läßt sich auch durch eine Polykondensation von Benzaldehyd und Resorcin herstellen.

In der erfindungsgemäßen Speicherzelle wird als flüssiger Elektrolyt eine gesättigte Lithiumjodidlösung verwendet. Für die Herstellung dieser Lösung wird Lithiumjodid beispielsweise in Thetrahydrofuran gelöst.

Eine gesättigte Natriumjodidlösung ist ebenfalls als Elektrolyt geeignet. In diesem Fall wird Natriumjodid in Diglyme gelöst.

Die Erfindung wird nachfolgend anhand einer Zeichnung näher erläutert.

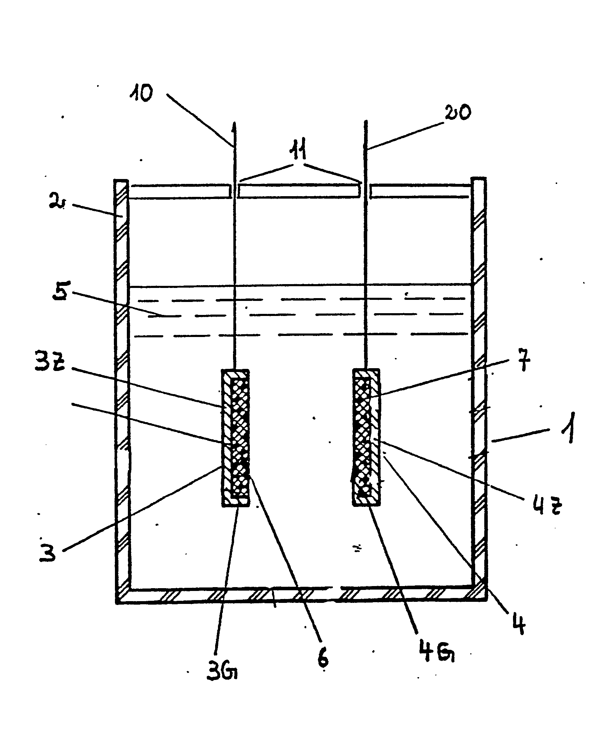

Die in der Figur dargestellte elektrochemische Speicherzelle 1 wird im wesentlichen durch ein Gehäuse 2, eine Anode 3, eine Kathode 4 sowie einen flüssigen Elektrolyten 5 gebildet. Das Gehäuse ist vorzugsweise aus einem korrosionsbeständigen Werkstoff, vorzugsweise einem langlebigen nichtleitenden Material gefertigt. Seine Abmessungen sind so gewählt, daß die Anode 3 und die Kathode 4 innerhalb des Gehäuses so angeordnet werden können, daß sie allseitig von dem flüssigen Elektrolyten 5 umgeben sind. Die Anode 3 der Speicherzelle 1 ist außen durch einen einseitig geschlossenen metallischen Zylinder 3Z begrenzt. Die Höhe des Zylinders 3Z beträgt nur wenige Millimeter. Bei dem hier dargestellten Ausführungsbeispiel weist der metallische Zylinder 3Z eine Höhe von 2 mm auf. Der Innendurchmesser des metallischen Zylinders 3Z ist hierbei 3,4 cm gewählt. Die Abmessungen des Zylinders können je nach Größe der zu bauenden Speicherzelle auch größer dimensioniert werden. Die Funktionsweise der Speicherzelle 1 wird hierdurch nicht beeinflußt. Der Zylinder 3Z ist so angeordnet, daß seine geschlossene Fläche nach außen zeigt und seine Längsachse zur oberen und unteren Begrenzungsfläche des Gehäuses 2 parallel verläuft. Die seitliche Außenfläche des Zylinders 3Z ist mit einem elektrischen Leiter 10 verbunden. Dieser ist durch eine Öffnung 11 in der Deckfläche des Gehäuses nach außen geführt und steht über das Gehäuse 2 einige Millimeter über. Im Innenraum des Zylinders 3Z ist das die Anode bildende Polymer 6 angeordnet.

Erfindungsgemäß wird hierfür ein Polymer 6 verwendet, das Triaromatmethaneinheiten als Grundbausteine aufweist. Bei dem hier dargestellten Ausführungsbeispiel weist die Anode 3 einen Kern aus Graphitfilz 3G auf, der eine 95 %ige Porosität besitzt. Der Graphitfilz ist hierbei vollständig mit dem Polymer getränkt. Die Verwendung eines solches Graphitfilzes 3G ist für die Funktion der Speicherzelle nicht erforderlich. Insbesondere kann das Polymer auch in Form von Tabletten gepreßt werden, die dann in den metallischen Zylinder eingelegt werden. Vorzugsweise ist die Größe der Tabletten an die Größe des Zylinderinnenraums angepaßt. Bei der Herstellung des die Anode bildenden Polymers werden dem Basismaterial desselben soviele Gew.% Monoisocyanat zugefügt, daß alle OH-Gruppen des Polymers in Urethan-Gruppen umgesetzt werden. Es besteht die Möglichkeit, dieses Polymer bei seiner Herstellung oder vor dem Tränken des Graphitfilzes mit selbigem zusätzlich mit Alkalimetall oder Erdalkalimetall zu dotieren. Das Polymer ist in Dimethylformamid, Tetrahydrofuran und Aceton löslich, so daß die Tränkung des Graphitfilzes mit diesem Polymer problemlos möglich ist. Durch die oben erwähnte Zufügung von Monoisocyanat und der damit bewirkten Umsetzung der OH-Gruppen wird erreicht, daß es an der Anode 3 zu keiner Wasserstoffentwicklung kommt.

In einem definierten Abstand von der Anode 3 ist die Kathode 4 angeordnet. Die Größe des Abstandes ist so gewählt, daß zwischen beiden eine ausreichend große Menge des flüssigen Elektrolyten 5 vorhanden ist. Die äußere Begrenzung der Kathode 4 wird ebenfalls durch einen metallischen Zylinder 4Z gebildet, der gleiche Form wie der Zylinder 3Z aufweist. Seine Abmessungen sind ebenso gewählt. Die verschlossene Fläche des Zylinders ist nach außen gerichtet. Die seitliche Außenfläche des Zylinders 4Z ist mit einem elektrischen Leiter 20 verbunden, der durch eine Öffnung 11 in der Deckfläche des Gehäuses 2 nach außen geführt ist und einige Millimeter über das Gehäuse übersteht. Der Innenraum des metallischen Zylinder 4Z enthält das die Kathode 4 bildende Polymer 7. Bei der hier dargestellten Ausführungsform weist die Kathode 4 einen Kern bestehend aus Graphitfilz 4G auf. Dieser ist mit dem Polymer getränkt. Vorzugsweise wird hierfür ein Polymer verwendet, dessen Grundbausteine durch Triaromatmethaneinheiten gebildet werden. Auf den Kern aus Graphitfilz 3G kann auch verzichtet werden. In diesem Fall wird in den Innenraum des Zylinders 4Z eine aus dem Polymer geformte Tablette eingelegt. Das die Kathode bildende Polymer 7 ist mit Halogenen bzw. Chalkogenen, insbesondere mit Jod oder Brom bzw. Selen oder Schwefel getränkt. Erfindungsgemäß besteht die Möglichkeit, das Polymer auch mit Komplexanionen der dritten, vierten, fünften, sechsten und/oder siebten Gruppe des Periodensystems zu dotieren.

Als Elektrolyt wird bei dem hier beschriebenen Ausführungsbeispiel eine gesättigte Natriumjodidlösung verwendet. Zur Bildung dieser Lösung wird vorzugsweise Natriumjodid in Diglyme gelöst.

Die Funktionsweise der erfindungsgemäßen wiederaufladbaren elektrochemischen Speicherzelle 1 wird nachfolgend erläutert.

Für die Aufladung der Speicherzelle wird eine Gleichspannungsquelle an die Elektroden 3 und 4 angeschlossen. Insbesondere wird an die Anode 3 der negative Pol und an die Kathode 4 der positive Pol der Gleichspannungsquelle (hier nicht dargestellt) angeschlossen. Hierdurch wird bewirkt, daß Natriumionen zur Anode 3 und Jodionen zur Kathode 4 wandern. Innerhalb der Kathode werden die Natriumionen zu neutralem Natrium reduziert. Im Bereich der Anode läuft nachfolgende chemische Reaktion ab:

$$Na^+ + e \rightarrow Na° \text{(elektrochemisch)}$$

Anschließend werden zwischen dem neutralen Natrium und dem Polymer Charge-Transfer-Komplexe gebildet.

Insbesondere spielt sich folgende Reaktion innerhalb der Anode ab:

$$N_a + Polymer \rightleftarrows Na^+ + Polymer^-$$

Zur gleichen Zeit kommt es im Bereich der Kathode zu einer elektrochemischen Oxidation der Jodanionen.

$$J^- - e \rightarrow J° \text{(elektrochemisch)}$$

Anschließend bilden die Jodatome mit dem Polymer Charge-Transfer-Komplexe gemäß der nachfolgenden Gleichung:

$$J° + Polymer \rightleftarrows J^- + Polymer^+$$

Die hier dargestellte Speicherzelle 1 weist einen Innenwiderstand von 20 Ohm auf. Sie wird 1,5 h mit 5 Volt aufgeladen. Hierdurch wird eine Ruhespannung von etwa 3 Volt erreicht. Die Ruhespannung berechnet sich gemäß der nachfolgenden Gleichung:

$$U_{ruhesp} = \Delta G/(n \times F)$$

Dabei bedeutet $\Delta G$ die freie Reaktionsenthalpie, n die Elektronenzahl pro Mol und F die Faradaykonstante. Hieraus ergibt sich für die Ruhespannung ein Wert

$$U_{ruhesp} = (287/96{,}4)\ V \approx 3V$$

Beim Entladen der Speicherzelle wird an die elektrischen Leiter 10 und 20 der Anode 3 bzw. der Kathode 4 ein Widerstand angeschlossen. Während der Entladung läuft der umgekehrte Vorgang ab, insbesondere wandern die Natriumionen aus der Anode 3 zurück in den Elektrolyten. Das gleiche gilt für die Jodionen.

**Patentansprüche**

1. Wiederaufladbare elektrochemische Speicherzelle (1) mit einer Anode (3) und einer Kathode (4), die beide jeweils aus einem synthetischen Polymer (6, 7) gefertigt und von einem flüssigen Elektrolyten (5) umgeben sind, wobei die Polymere mit ionischen Dotierungssubstanzen reversibel elektrochemisch dotiert sind, dadurch gekennzeichnet, daß sowohl die Anode (3) als auch die Kathode (4) aus einem solchen synthetischen Polymer (6, 7) gefertigt ist, das Triaromatmethaneinheiten als Grundbausteine aufweist.

2. Speicherzelle nach Anspruch 1, dadurch gekennzeichnet, daß das die Anode (3) bildende Polymer (6) mit Elektronendonatoren und das die Kathode (4) bildende Polymer (7) mit Elektronenakzeptoren dotiert ist.

3. Speicherzelle nach Anspruch 1 oder 2, dadurch gekennzeichnet, daß das die Kathode (4) bildende Polymer (7) mit Halogenen und/oder Chalkogenen dotiert ist.

4. Speicherzelle nach Anspruch 3, dadurch gekennzeichnet, daß das die Kathode bildene Polymer mit Jod oder Brom und/oder Elementen der sechsten Gruppe des Periodensystems, vorzugsweise Selen und Schwefel dotiert ist.

5. Speicherzelle nach Anspruch 1 oder 2, dadurch gekennzeichnet, daß das die Kathode (4) bildende Polymer (7) mit Komplexanionen der dritten, vierten, fünften, sechsten und/oder siebten Gruppe des Periodensystems dotiert ist.

6. Speicherzelle nach einem der Ansprüche 1 oder 2, dadurch gekennzeichnet, daß bei dem die Anode (3) bildenden Polymer (6) die OH-Gruppen in Urethan-Gruppen umgesetzt sind.

7. Speicherzelle nach Anspruch 6, dadurch gekennzeichnet, daß dem die Anode (3) bildenden Polymer (6) zur Umsetzung seiner OH-Gruppen in Urethan-Gruppen Monoisocyanat zugesetzt ist.

8. Speicherzelle nach einem der Ansprüche 1, 2, 6 und 7, dadurch gekennzeichnet, daß das die Anode (3) bildene Polymer (6) zusätzlich mit Alkalimetall und/oder Erdalkalimetall dotiert ist.

9. Speicherzelle nach einem der Ansprüche 1 bis 8, dadurch gekennzeichnet, daß der flüssige Elektrolyt (5) aus einer gesättigten Lithiumjodidlösung besteht, und daß als Lösungsmittel Tetrahydrofuran dient.

10. Speicherzelle nach einem der Ansprüche 1 bis 8, dadurch gekennzeichnet, daß der flüssige Elektrolyt (5) durch eine gesättigte Natriumjodidlösung gebildet ist, und daß als Lösungsmittel Diglyme dient.

**Claims**

1. Rechargeable electrochemical storage cell (1) having an anode (3) and a cathode (4) which are each made from a synthetic polymer (6, 7) and are surrounded by a liquid electrolyte (5), the polymers being electrochemically reversibly doped with ionic doping substances, characterized in that both the anode (3) and the cathode (4) are made of a type of synthetic polymer (6, 7), which has triarylmethane units as the basic structural element.

2. Storage cell according to Claim 1, characterized in that the polymer (6) forming the anode (3) is doped with electron donors and the polymer (7) forming the cathode (4) is doped with electron acceptors.

3. Storage cell according to Claim 1 or 2, characterized in that the polymer (7) forming the cathode (4) is doped with halogens and/or chalkogens.

4. Storage cell according to Claim 3, characterized in that the polymer forming the cathode is doped with iodine or bromine and/or elements of the sixth group of the periodic system, preferably with selenium and sulphur.

5. Storage cell according to Claim 1 or 2, characterized in that the polymer (7) forming the cathode (4) is doped with complex anions from the third, fourth, fifth, sixth and/or seventh group of the periodic system.

6. Storage cell according to one of Claims 1 or 2, characterized in that the OH groups in the polymer (6) forming the anode (3) have been converted into urethane groups.

7. Storage cell according to Claim 6, characterized in that a monoisocyanate has been added to the polymer, (6) forming the anode (3) for converting its OH groups into urethane groups.

8. Storage cell according to one of Claims 1, 2, 6 and 7, characterized in that the polymer (6) forming the anode (3) has additionally been doped with an alkali metal and/or alkaline earth metal.

9. Storage cell according to one of Claims 1 to 8, characterized in that the liquid electrolyte (5) consists of a saturated lithium iodide solution and that tetrahydrofuran is used as the solvent.

10. Storage cell according to one of Claims 1 to 8, characterized in that the liquid electrolyte (5) is formed by a saturated sodium iodide solution and that diglyme is used as the solvent.

**Revendications**

1. Cellule d'accumulateur électrochimique rechargeable (1) comportant une anode (3) et une cathode (4) qui sont faites chacune d'un polymère synthétique (6, 7) et sont entourées par un électrolyte liquide (5), les polymères étant dopés, électrochimiquement et réversiblement, par des substances de dopage ioniques, caractérisée par le fait que l'anode (3) est faite, tout comme la cathode (4), d'un polymère synthétique (6, 7) présentant, en tant que motifs, des unités triaryl-méthane.

2. Cellule d'accumulateur selon revendication 1, caractérisée par le fait que le polymère (6) formant l'anode (3) est dopé avec des donneurs d'électrons et le polymère (7) formant la cathode (4) est dopé avec des accepteurs d'électrons.

3. Cellule d'accumulateur selon revendication 1 ou 2, caractérisée par le fait que le polymère (7) formant la cathode (4) est dopé avec des halogènes et/ou des chalcogènes.

4. Cellule d'accumulateur selon revendication 3, caractérisée par le fait que le polymère formant la cathode est dopé avec l'iode ou le brome et/ou des éléments du sixième groupe du système périodique, de préférence sélénium et soufre.

5. Cellule d'accumulateur selon revendication 1 ou 2, caractérisée par le fait que le polymère (7) formant la cathode (4) est dopé avec des anions complexes du troisième, quatrième, cinquième, sixième et/ou septième groupe du système périodique.

6. Cellule d'accumulateur selon l'une quelconque des revendications 1 ou 2, caractérisée par le fait que, dans le polymère (6) formant l'anode (3), les groupes OH sont transformés en groupes uréthane.

7. Cellule d'accumulateur selon revendication 6, caractérisée par l'addition de mono-isocyanate au polymère (6) formant l'anode (3), pour la transformation de ses groupes OH en groupes uréthane.

8. Cellule d'accumulateur selon l'une quelconque des revendications 1, 2, 6 ou 7, caractérisée par le fait que le polymère (6) formant l'anode (3) est en outre dopé avec un métal alcalin et/ou un métal alcaliano-terreux.

9. Cellule d'accumulateur selon l'une quelconque des revendications 1 à 8, caractérisée par le fait que l'électrolyte liquide (5) est constitué par une solution saturée d'iodure de lithium, et le tétrahydrofurane sert de solvant.

10. Cellule d'accumulateur selon l'une, quelconque des revendicatioas 1 à 8, caractérisée par le fait que l'électrolyte liquide (5) est constitué par une solution saturée d'iodure de sodium, et le diglyme sert de solvant.